# FASCICULE DE BREVET EUROPEEN

(11) **EP 3 971 504 B1**
(45) Date de publication et mention de la délivrance du brevet: **22.04.2026**
(21) Numéro de dépôt: 21197627.9
(22) Date de dépôt: 20.09.2021
(51) Int. Cl.: F25J 3/04, B01D 3/32, B01D 3/14

(54) **APPAREIL ET PROCÉDÉ DE SÉPARATION D'AIR PAR DISTILLATION CRYOGÉNIQUE**
ANLAGE UND VERFAHREN ZUR LUFTZERLEGUNG DURCIH TIEFTEMPERATURDESTILLATION
DEVICE AND METHOD FOR AIR SEPARATION BY CRYOGENIC DISTILLING

(30) Priorité: 21.09.2020 FR 2009535
(43) Date de publication de la demande: 23.03.2022
(73) Titulaire: L'Air Liquide, société anonyme pour l'Étude et l'Exploitation des procédés Georges Claude, 75007 Paris (FR)
(72) Inventeur: LE BOT, Patrick, 78350 JOUY EN JOSAS (FR)
(74) Mandataire: Air Liquide

(56) Documents cités:
- DE-A1- 102013 019 147
- DE-A1- 3 709 588
- FR-A- 1 245 295
- FR-A1- 2 776 206
- US-A- 6 023 945
- "AIR SEPARATION LOW PURITY OXYGEN PRODUCTION", RESEARCH DISCLOSURE, KENNETH MASON PUBLICATIONS, HAMPSHIRE, UK, GB, no. 393, 1 January 1997 (1997-01-01), pages 63 - 65, XP000693707, ISSN: 0374-4353

## Description

La présente invention est relative à un appareil de séparation d'air par distillation cryogénique comprenant au moins trois colonnes de séparation dont deux colonnes concentriques et un procédé de séparation d'air correspondant selon les préambules des revendications 1 et 8 respectivement. Un tel appareil et un tel procédé sont connus de DE3709588A1 .

Il est connu de séparer l'air dans une double colonne de distillation comprenant une première colonne opérant à une première pression et une deuxième colonne opérant à une deuxième pression inférieure à la première pression. Classiquement la cuve de la deuxième colonne est thermiquement reliée à la tête de la première colonne. Une troisième colonne peut être reliée à la deuxième colonne et éventuellement à la première colonne.

Cette troisième colonne peut être de type colonne Etienne, opérant à une pression entre les première et deuxième pressions et alimentée par un liquide enrichi en oxygène provenant de la cuve de la première colonne. Un fluide enrichi en oxygène et un fluide enrichi en azote produits dans la troisième colonne peuvent alimenter la deuxième colonne à des niveaux différents.

Alors que la première et la deuxième colonne forment une structure appelée double colonne, la troisième colonne est indépendante de cette structure.

Dans une configuration régulière, la deuxième colonne est superposée à la première colonne et a un diamètre supérieur à celui de la première colonne. La section de la boîte froide devant contenir les deux colonnes est donc dictée par le diamètre de la deuxième colonne. Ajouter une colonne supplémentaire, telle qu'une troisième colonne décrite ci-dessus, augmente encore la section de la boite froide, voire nécessite l'adjonction d'une boite supplémentaire. D'autres architectures que cette architecture sont connues, telles que celles décrites dans EP1078212B1, mais nécessitent néanmoins un élargissement de la boite froide ou une autre boite.

Il est donc avantageux de bénéficier de l'espace disponible sous la deuxième colonne de grand diamètre pour y loger la colonne additionnelle. De façon avantageuse, elle sera concentrique à la première colonne.

L'espace disponible (et donc l'épaisseur de cette colonne concentrique) étant limité, cette configuration est particulièrement adaptée pour ajouter une colonne qui traite une charge gazeuse (ce qui dimensionne au premier ordre la section de passage de la colonne) faible par rapport au débit d'air alimentant le système composé de la première et de la deuxième colonnes. C'est le cas pour la troisième colonne de type colonne Etienne, qui traite environ 40% mol du débit total d'air d'alimentation à une pression intermédiaire, ou de type colonne de mélange, qui traite environ 30% mol du débit total d'air d'alimentation, par exemple à la première pression.

Le choix du garnissage de cette colonne concentrique (et de la première et deuxième colonnes) pourra être judicieusement adapté pour que sa capacité soit telle qu'il ne soit pas nécessaire d'avoir un diamètre extérieur de la colonne concentrique supérieur à celui de la deuxième colonne.

DE3709588A1 divulgue une double colonne disposée à l'intérieur d'une autre double colonne, formant ainsi quatre compartiments de distillation, les deux doubles colonnes ayant une cuve commune.

Research Disclosure « Air Separation Low Purity Oxygen Production" propose de disposer la colonne de mélange à l'intérieur de la colonne haute pression, donc le contraire de ce qui est proposé dans la présente invention. Il est suggéré d'utiliser des colonnes concentriques mais étant donné la prémisse de base, c'est la colonne haute pression qui serait la colonne annulaire.

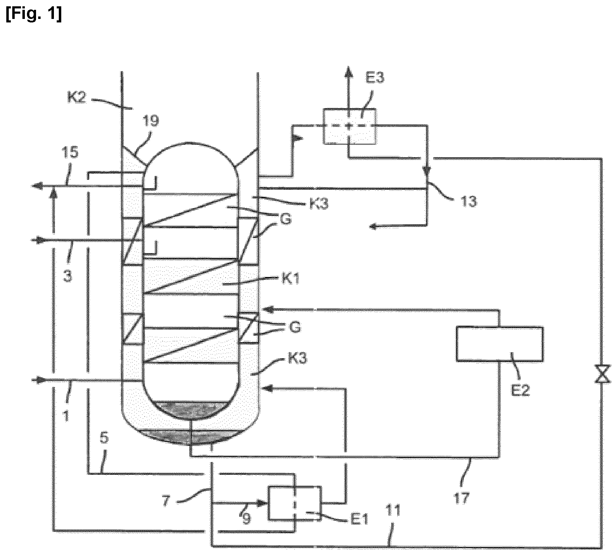

FR2776206 décrit des colonnes concentriques mais avec des tronçons qui fonctionnent en série. Ainsi la distillation qui s'effectue dans la colonne intérieure de la Figure 1 est la continuation de celle commencée dans la colonne annulaire qui l'entoure.

Selon un objet de l'invention, il est prévu un appareil selon la revendication 1..

Selon d'autres aspects facultatifs :
- aucune conduite n'est reliée pour envoyer de l'air à la troisième colonne
- la deuxième colonne est reliée pour recevoir du liquide de tête de la troisième colonne.
- l'appareil ne comprend pas d'espace entre la paroi extérieure de la section supérieure de la première colonne et la paroi intérieure de la troisième colonne,
- la paroi extérieure de la première colonne est la paroi intérieure de la troisième colonne.
- l'appareil est conçu pour opérer avec une différence de pression entre celle de la troisième colonne et celle de la première colonne inférieure à 3,5 bars, de préférence inférieure à 2 bars.
- la cuve de la troisième colonne est disposée en dessous de la cuve de la première colonne.
- la première colonne est entièrement contenue à l'intérieur de la troisième colonne.
- l'appareil comprend une enceinte isolée thermiquement contenant les première, deuxième et troisième colonnes.
- la deuxième colonne a un diamètre supérieur à celui de la première colonne.
- la deuxième colonne ne contient pas de partition
- la première colonne a une cuve fermée
- la troisième colonne a une cuve fermée
- la deuxième colonne et la troisième colonne ont une virole commune
- la première colonne est plus courte que la troisième colonne
- la première colonne et la troisième colonne ont un toit commun
- le toit de la première colonne forme au moins une partie de la cuve de la deuxième colonne.

Selon un autre aspect de l'invention, il est prévu un procédé selon la revendication 8

De préférence le système ne comprend que la première colonne de distillation capable d'opérer à une première pression ayant une section supérieure et une section inférieure, la deuxième colonne de distillation capable d'opérer à une deuxième pression inférieure à la première pression et ayant un diamètre et la troisième colonne de séparation.

De préférence toute l'espace à l'intérieur de la deuxième colonne fonctionne à une seule pression. Il est évident qu'il y aura des différences de pression mineures entre le haut et le bas de la colonne. Par contre à une élévation donnée de la deuxième colonne, tout moyen d'échange de masse et de chaleur fonctionne à la même pression à travers la section de la colonne à cette élévation.

De préférence à toute élévation de la deuxième colonne, tout moyen d'échange de masse et de chaleur fonctionne à la même pression à travers la section de la colonne à cette élévation.

La deuxième colonne n'est pas nécessairement alimentée en air.

Selon l'invention, la troisième colonne est une colonne annulaire disposée autour de la partie supérieure de la première colonne.

De préférence la pression opératoire de la colonne annulaire diffère de moins de 3,5 bars de la pression opératoire de la première colonne.

De préférence la température opératoire de la colonne annulaire (troisième colonne) diffère de moins de 5 °C de la température opératoire de la première colonne.

Ainsi le différentiel de température est suffisamment petit pour empêcher un transfert de chaleur suffisamment significatif entre les première et troisième colonnes pour perturber la distillation effectuée dans chacune des colonnes.

Si les températures des colonnes sont trop différentes, il est nécessaire de prévoir un système d'isolation thermique, tel que par exemple une lame de gaz. La troisième colonne comprend une paroi cylindrique extérieure et une paroi cylindrique intérieure. La lame de gaz est constituée par une espace annulaire dans l'espace entouré par la paroi intérieure et en contact avec cette paroi intérieure. Dépourvu de moyen d'échange de masse et de chaleur, l'espace est ouvert en bas et/ou en haut pour isoler la troisième colonne de la première colonne, mais ne permet pas un court-circuitage de gaz à distiller.

Selon l'invention, un soutirage liquide et éventuellement au moins un soutirage gaz ou un autre soutirage liquide est effectué depuis la partie de la première colonne entourée par la troisième colonne. Ce soutirage relié à la première colonne traverse la troisième colonne dans une zone dépourvue de moyens d'échange de masse et de chaleur. La configuration des sections garnies de la troisième colonne K3 est de préférence établie de telle sorte que tout soutirage (liquide ou gaz) de la première colonne se fasse dans une zone dépourvue de garnissage de la troisième colonne.

L'invention sera décrite de manière plus détaillée en se référant à la figure.

**[****Fig. 1****]** montre schématiquement un appareil à trois colonnes, la troisième colonne opérant à une pression intermédiaire entre celles des deux autres colonnes.

[Fig. 1] illustre un appareil de séparation d'air par distillation cryogénique comprenant une première colonne K1 capable d'opérer à une première pression ayant une section supérieure et une section inférieure et une deuxième colonne K2 capable d'opérer à une deuxième pression inférieure à la première pression et ayant un diamètre.

La deuxième colonne K2 est disposée au-dessus de la première colonne K1, formant une structure unique.

Un débit d'air 1 est envoyé comme gaz d'alimentation en cuve de la première colonne K1 où il se séparer par distillation en un liquide enrichi en oxygène en cuve et un gaz enrichi en azote en tête.

La première colonne K1 est également alimenté par un débit d'air 3 biphasique qui dans la figure passe dans une conduite à travers les garnissages Un passage en dehors des garnissages serait préférable.

Une troisième colonne K3 de forme annulaire, ayant un diamètre interne et un diamètre externe, est disposée autour de la première colonne K1 ; dans le cas illustré, la troisième colonne est plus haute que la première colonne, de sorte que la cuve de la troisième colonne K3 se trouve en dessous de la cuve de la première colonne K1.

La pression opératoire de la colonne annulaire K3 diffère de moins de 3.5 bars de la pression opératoire de la première colonne K1. La première colonne peut par exemple opérer à 6 bars et la troisième K3 à une pression comprise entre 3.5 et 4 bars.

La première colonne K1 comprend trois sections de garnissages, les unes au-dessus des autres, séparées entre elles par des espaces libres, la troisième colonne K3 en compte deux. Evidemment le nombre de sections peut varier en fonction des séparations à réaliser. Les sections de la colonne K1 sont à base circulaire et celles de la colonne K3 à base annulaire.

Dans ce cas, la paroi extérieure de la première colonne K1 constitue la paroi intérieure de la troisième colonne K3. Il est également possible que la première colonne ait une paroi extérieure et la troisième colonne une paroi intérieure distinctes, avec un espace entre les deux parois. Cet espace serait ouvert sur une des extrémités pour permettre éventuellement l'établissement d'une lame de gaz isolante.

La deuxième colonne K2 a le même diamètre que le diamètre externe de la troisième colonne K3. De cette façon, les colonnes K2, K3 peuvent avoir une virole de même diamètre, voire commune. Le haut de la troisième colonne K3 est séparé de la cuve de la colonne K2 par une barrière frustoconique 19 empêchant le passage de tout fluide.

L'azote gazeux formé en tête de la première colonne est soutiré par une conduite passant dans un espace au-dessus des garnissages de la troisième colonne K3. L'azote 5 est envoyé à un échangeur de chaleur E1 où il se condense pour former un liquide.

De l'azote liquide 15 est soutiré par une conduite passant dans un espace au-dessus des garnissages de la troisième colonne K3. Il est mélangé avec l'azote condensé 5 provenant de l'échangeur E1.

Du liquide enrichi en oxygène 17 est soutiré de la cuve de la première colonne K1 à travers la troisième colonne K3 dans un espace dépourvu de garnissages. Le liquide 17 est éventuellement sous refroidi dans un échangeur de chaleur E2 et envoyé alimenter la troisième colonne K3 où il se sépare.

Le gaz enrichi en azote formé en tête de la colonne K3 est soutiré de la colonne et condensé dans l'échangeur de chaleur E3 avant d'être envoyé en partie en tête de la colonne K3 comme reflux, et pour une autre partie en tête de la deuxième colonne comme reflux.

Le liquide de cuve 7 enrichi en oxygène de la troisième colonne K3 est divisé en deux. Une partie 9 est vaporisée dans l'échangeur de chaleur E1 et alimente la cuve de la troisième colonne K3. Le reste 11 est détendu dans une vanne à une pression proche de celle de la deuxième colonne, et envoyé comme source froide dans l'échangeur E3, où il est majoritairement vaporisé. La fraction vaporisée et éventuellement une fraction liquide restante sont envoyées comme alimentation de la deuxième colonne.

La deuxième colonne K2, qui n'est pas illustrée en détail, correspond à une colonne basse pression habituelle d'une double colonne.

Ainsi la ou les fractions du liquide vaporisé 11 qui alimente(nt) la deuxième colonne est séparée/sont séparées pour former de l'azote en tête de la deuxième colonne K2 et un liquide riche en oxygène en cuve de la deuxième colonne K2.

La deuxième colonne K2 est reliée pour recevoir du liquide de tête 15 de la troisième colonne K3
L'appareil peut donc produire de l'oxygène gazeux et/ou liquide de la deuxième colonne K2 et de l'azote liquide et/ou gazeux de la première colonne.

La troisième colonne K3 correspond à une colonne Etienne bien connue dans l'art.

Le débit 17 alimentant la troisième colonne K3 est compris entre 30% et 50% (base molaire) du débit d'air total d'alimentation des première, deuxième et troisième colonnes (débits 1 et 3).

Si la pression de la colonne K3 diffère de celle de la première colonne de moins de 3,5 bars, la présence d'une lame de gaz ne sera pas nécessaire.

La troisième colonne peut entourer seulement une partie de la première colonne, par exemple la partie supérieure ou la partie inférieure.

La deuxième colonne a un diamètre supérieur à celui de la première colonne et/ou égal ou supérieur au diamètre extérieur de la troisième colonne.

Le plus grand diamètre d'une colonne est considéré comme son diamètre. Par exemple si la deuxième colonne comprend une section supérieure, souvent appelée un minaret, à plus petit diamètre que la partie principale de la colonne, c'est le diamètre de la partie principale qui est considéré comme le diamètre. les garnissages de la première colonne K1 sont des garnissages structurés.

Les garnissages de la troisième colonne K3 sont des garnissages vrac.

De préférence la pression de la troisième colonne diffère de celle de la première colonne d'au moins 1 bar.

## Revendications

1. Appareil de séparation d'air par distillation cryogénique comprenant un système de colonnes dont une première colonne de distillation (K1) capable d'opérer à une première pression ayant une section supérieure et une section inférieure, une deuxième colonne de distillation (K2) capable d'opérer à une deuxième pression inférieure à la première pression et ayant un diamètre et une troisième colonne de séparation (K3), par exemple de distillation, de section annulaire, ayant un diamètre interne et un diamètre externe, disposée autour de la première colonne, le diamètre externe de la troisième colonne étant au plus égal à celui de la deuxième colonne, l'appareil comprenant également une conduite pour envoyer de l'air (1, 3) à le première colonne, une conduite pour envoyer un fluide enrichi en oxygène à un point intermédiaire de la deuxième colonne, éventuellement une conduite de reflux (15) reliée à un niveau intermédiaire de la section supérieure de la première colonne pour soutirer un liquide enrichi en azote, la conduite de reflux étant reliée à la tête de la deuxième colonne et passant à travers une région de la troisième colonne dépourvue de moyens d'échange de masse, et une conduite (15,17) pour soutirer un liquide de la première colonne, la conduite étant reliée à une autre colonne (K2, K3) du système de colonnes et passant à travers une région de la troisième colonne dépourvue de moyens de transfert de masse,
la troisième colonne (K3) est reliée pour recevoir du liquide de cuve (17) de la première colonne (K1),
**caractérisé en ce que** la deuxième colonne de distillation ne contient aucune autre colonne de distillation et **en ce que** l'appareil comprend une conduite pour alimenter la troisième colonne (K3) en liquide de cuve (17) de la première colonne (K1).

2. Appareil selon la revendication 1 dans lequel la deuxième colonne (K2) est reliée pour recevoir du liquide de tête de la troisième colonne (K3).

3. Appareil selon l'une des revendications 1 ou 2 ne comprenant pas d'espace entre la paroi extérieure de la section supérieure de la première colonne (K1) et la paroi intérieure de la troisième colonne (K3), la paroi extérieure de la première colonne étant de préférence la paroi intérieure de la troisième colonne.

4. Appareil selon l'une des revendications précédentes conçu pour opérer avec une différence de pression entre celle de la troisième colonne (K3) et celle de la première colonne (K1) inférieure à 3,5 bars, de préférence inférieure à 2 bars.

5. Appareil selon l'une des revendications précédentes dans lequel la cuve de la troisième colonne (K3) est disposée en dessous de la cuve de la première colonne (K1).

6. Appareil selon l'une des revendications précédentes dans lequel la première colonne (K1) est entièrement contenue à l'intérieur de la troisième colonne (K3).

7. Appareil selon l'une des revendications précédentes comprenant une enceinte isolée thermiquement contenant les première, deuxième et troisième colonnes.

8. Procédé de séparation d'air par distillation cryogénique dans un système de colonnes dont une première colonne de distillation (K1) capable d'opérer à une première pression ayant une section supérieure et une section inférieure, une deuxième colonne de distillation (K2) capable d'opérer à une deuxième pression inférieure à la première pression et ayant un diamètre et une troisième colonne de séparation (K3), par exemple de distillation, de section annulaire, ayant un diamètre interne et un diamètre externe, disposée de façon annulaire autour de la première colonne, le diamètre externe de la troisième colonne étant au plus égal à celui de la deuxième colonne, dans lequel on envoie de l'air (1,3 ) à la première colonne, on envoie un fluide enrichi en oxygène à un point intermédiaire de la deuxième colonne, on alimente la troisième colonne en liquide enrichi en oxygène (17) en provenance de la première colonne (K1), éventuellement on soutire un liquide enrichi en azote (15) à travers une conduite de reflux reliée à un niveau intermédiaire de la section supérieure de la première colonne, la conduite de reflux étant reliée à la tête de la deuxième colonne et passant à travers une région de la troisième colonne dépourvue de moyens d'échange de masse, et on soutire un liquide enrichi en oxygène (17) de la première colonne par une conduite reliée à une autre colonne du système de colonnes et passant à travers une région de la troisième colonne dépourvue de moyens d'échange de masse **caractérisé en ce que** la deuxième colonne de distillation ne contient aucune autre colonne de distillation, et le débit alimentant la troisième colonne étant compris entre 30% et 50% base molaire du débit total d'alimentation des première, deuxième et troisième colonnes

9. Procédé selon la revendication 8 dans lequel à une élévation donnée de la deuxième colonne (K2), tout moyen d'échange de masse et de chaleur fonctionne à la même pression à travers la section de la colonne à cette élévation.

10. Procédé selon la revendication 9 dans lequel à toute élévation de la deuxième colonne (K2), tout moyen d'échange de masse et de chaleur fonctionne à la même pression à travers la section de la colonne à cette élévation.

## Patentansprüche

1. Eine Vorrichtung zur Luftzerlegung durch kryogene Destillation, umfassend ein Kolonnensystem mit einer ersten Destillationskolonne (K1), die bei einem ersten Druck betrieben werden kann und einen oberen Abschnitt und einen unteren Abschnitt aufweist, einer zweiten Destillationskolonne (K2), die bei einem zweiten Druck betrieben werden kann, der niedriger als der erste Druck ist, und einen Durchmesser aufweist, und einer dritten Trennkolonne (K3), beispielsweise zur Destillation, mit ringförmigem Querschnitt, die einen Innendurchmesser und einen Außendurchmesser aufweist und um die erste Kolonne herum angeordnet ist, wobei der Außendurchmesser der dritten Kolonne höchstens gleich dem der zweiten Kolonne ist, wobei die Vorrichtung ebenfalls eine Leitung zum Zuführen von Luft (1, 3) zur ersten Kolonne, eine Leitung zum Zuführen eines mit Sauerstoff angereicherten Fluids zu einem Zwischenpunkt der zweiten Kolonne, gegebenenfalls eine Rückflussleitung (15), die mit einer Zwischenebene des oberen Abschnitts der ersten Kolonne verbunden ist, um eine mit Stickstoff angereicherte Flüssigkeit abzuziehen, wobei die Rückflussleitung mit dem Kopf der zweiten Kolonne verbunden ist und durch einen Bereich der dritten Kolonne verläuft, der frei von Stoffaustauschmitteln ist, und eine Leitung (15, 17) zum Abziehen einer Flüssigkeit aus der ersten Kolonne umfasst, wobei die Leitung mit einer anderen Kolonne (K2, K3) des Kolonnensystems verbunden ist und durch einen Bereich der dritten Kolonne verläuft, der frei von Stoffaustauschmitteln ist, die dritte Kolonne (K3) ist angeschlossen, um Sumpfflüssigkeit (17) aus der ersten Kolonne (K1) zu empfangen, **dadurch gekennzeichnet, dass** die zweite Destillationskolonne keine andere Destillationskolonne enthält und dass die Vorrichtung eine Leitung zum Speisen der dritten Kolonne (K3) mit Sumpfflüssigkeit (17) aus der ersten Kolonne (K1) umfasst.

2. Vorrichtung nach Anspruch 1, wobei die zweite Kolonne (K2) so angeschlossen ist, dass sie Kopfflüssigkeit aus der dritten Kolonne (K3) empfängt.

3. Vorrichtung nach einem der Ansprüche 1 oder 2, die keinen Raum zwischen der Außenwand des oberen Abschnitts der ersten Kolonne (K1) und der Innenwand der dritten Kolonne (K3) aufweist, wobei die Außenwand der ersten Kolonne vorzugsweise die Innenwand der dritten Kolonne ist.

4. Vorrichtung nach einem der vorhergehenden Ansprüche, die für den Betrieb mit einer Druckdifferenz zwischen der der dritten Kolonne (K3) und der der ersten Kolonne (K1) von weniger als 3,5 bar, vorzugsweise weniger als 2 bar, ausgelegt ist.

5. Vorrichtung nach einem der vorhergehenden Ansprüche, wobei der Sumpf der dritten Kolonne (K3) unterhalb des Sumpfes der ersten Kolonne (K1) angeordnet ist.

6. Vorrichtung nach einem der vorhergehenden Ansprüche, wobei die erste Kolonne (K1) vollständig innerhalb der dritten Kolonne (K3) enthalten ist.

7. Vorrichtung nach einem der vorhergehenden Ansprüche, umfassend ein thermisch isoliertes Gehäuse, das die erste, zweite und dritte Kolonne enthält.

8. Ein Verfahren zur Luftzerlegung durch kryogene Destillation in einem Kolonnensystem mit einer ersten Destillationskolonne (K1), die bei einem ersten Druck betrieben werden kann und einen oberen Abschnitt und einen unteren Abschnitt aufweist, einer zweiten Destillationskolonne (K2), die bei einem zweiten Druck betrieben werden kann, der niedriger als der erste Druck ist, und einen Durchmesser aufweist, und einer dritten Trennkolonne (K3), beispielsweise zur Destillation, mit ringförmigem Querschnitt, die einen Innendurchmesser und einen Außendurchmesser aufweist und ringförmig um die erste Kolonne herum angeordnet ist, wobei der Außendurchmesser der dritten Kolonne höchstens gleich dem der zweiten Kolonne ist, wobei Luft (1, 3) der ersten Kolonne zugeführt wird, ein mit Sauerstoff angereichertes Fluid einem Zwischenpunkt der zweiten Kolonne zugeführt wird, die dritte Kolonne mit sauerstoffangereicherter Flüssigkeit (17) aus der ersten Kolonne (K1) gespeist wird, gegebenenfalls eine stickstoffangereicherte Flüssigkeit (15) über eine Rückflussleitung abgezogen wird, die mit einer Zwischenebene des oberen Abschnitts der ersten Kolonne verbunden ist, wobei die Rückflussleitung mit dem Kopf der zweiten Kolonne verbunden ist und durch einen Bereich der dritten Kolonne verläuft, der frei von Stoffaustauschmitteln ist, und eine sauerstoffangereicherte Flüssigkeit (17) aus der ersten Kolonne über eine Leitung abgezogen wird, die mit einer anderen Kolonne des Kolonnensystems verbunden ist und durch einen Bereich der dritten Kolonne verläuft, der frei von Stoffaustauschmitteln ist, **dadurch gekennzeichnet, dass** die zweite Destillationskolonne keine andere Destillationskolonne enthält und der die dritte Kolonne speisende Durchfluss zwischen 30 % und 50 % auf molarer Basis des Gesamtspeisedurchflusses der ersten, zweiten und dritten Kolonne liegt

9. Verfahren nach Anspruch 8, wobei auf einer gegebenen Höhe der zweiten Kolonne (K2) jedes Stoff- und Wärmeaustauschmittel bei demselben Druck über den Querschnitt der Kolonne auf dieser Höhe arbeitet.

10. Verfahren nach Anspruch 9, wobei auf jeder Höhe der zweiten Kolonne (K2) jedes Stoff- und Wärmeaustauschmittel bei demselben Druck über den Querschnitt der Kolonne auf dieser Höhe arbeitet.

## Claims

1. An apparatus for separating air by cryogenic distillation comprising a column system including a first distillation column (K1) capable of operating at a first pressure having an upper section and a lower section, a second distillation column (K2) capable of operating at a second pressure lower than the first pressure and having a diameter, and a third separation column (K3), for example for distillation, of annular section, having an internal diameter and an external diameter, disposed around the first column, the external diameter of the third column being at most equal to that of the second column, the apparatus also comprising a conduit for sending air (1, 3) to the first column, a conduit for sending an oxygen-enriched fluid to an intermediate point of the second column, optionally a reflux conduit (15) connected to an intermediate level of the upper section of the first column for withdrawing a nitrogen-enriched liquid, the reflux conduit being connected to the top of the second column and passing through a region of the third column devoid of mass exchange means, and a conduit (15, 17) for withdrawing a liquid from the first column, the conduit being connected to another column (K2, K3) of the column system and passing through a region of the third column devoid of mass transfer means, the third column (K3) is connected to receive sump liquid (17) from the first column (K1), **characterized in that** the second distillation column contains no other distillation column and **in that** the apparatus comprises a conduit for feeding the third column (K3) with sump liquid (17) from the first column (K1).

2. The apparatus according to claim 1, wherein the second column (K2) is connected to receive top liquid from the third column (K3).

3. The apparatus according to one of claims 1 or 2, not comprising a space between the outer wall of the upper section of the first column (K1) and the inner wall of the third column (K3), the outer wall of the first column preferably being the inner wall of the third column.

4. The apparatus according to one of the preceding claims, designed to operate with a pressure difference between that of the third column (K3) and that of the first column (K1) of less than 3.5 bar, preferably less than 2 bar.

5. The apparatus according to one of the preceding claims, wherein the sump of the third column (K3) is disposed below the sump of the first column (K1).

6. The apparatus according to one of the preceding claims, wherein the first column (K1) is entirely contained within the third column (K3).

7. The apparatus according to one of the preceding claims, comprising a thermally insulated enclosure containing the first, second and third columns.

8. A process for separating air by cryogenic distillation in a column system including a first distillation column (K1) capable of operating at a first pressure having an upper section and a lower section, a second distillation column (K2) capable of operating at a second pressure lower than the first pressure and having a diameter, and a third separation column (K3), for example for distillation, of annular section, having an internal diameter and an external diameter, disposed in an annular manner around the first column, the external diameter of the third column being at most equal to that of the second column, wherein air (1, 3) is sent to the first column, an oxygen-enriched fluid is sent to an intermediate point of the second column, the third column is fed with oxygen-enriched liquid (17) from the first column (K1), optionally a nitrogen-enriched liquid (15) is withdrawn via a reflux conduit connected to an intermediate level of the upper section of the first column, the reflux conduit being connected to the top of the second column and passing through a region of the third column devoid of mass exchange means, and an oxygen-enriched liquid (17) is withdrawn from the first column via a conduit connected to another column of the column system and passing through a region of the third column devoid of mass exchange means, **characterized in that** the second distillation column contains no other distillation column, and the flow rate feeding the third column being comprised between 30% and 50% molar basis of the total feed flow rate of the first, second and third columns

9. The process according to claim 8, wherein at a given elevation of the second column (K2), any mass and heat exchange means operates at the same pressure across the section of the column at that elevation.

10. The process according to claim 9, wherein at any elevation of the second column (K2), any mass and heat exchange means operates at the same pressure across the section of the column at that elevation.
